(19) Europäisches Patentamt / European Patent Office / Office européen des brevets

(11) **EP 2 735 364 A1**

(12) **EUROPÄISCHE PATENTANMELDUNG**

(43) Veröffentlichungstag:
**28.05.2014 Patentblatt 2014/22**

(51) Int Cl.:
**B01J 2/04** *(2006.01)* **B01J 2/18** *(2006.01)*

(21) Anmeldenummer: **12194383.1**

(22) Anmeldetag: **27.11.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
• **Daiss, Andeas**
**67061 Ludwigshafen (DE)**
• **Schönherr, Michael**
**67227 Frankenthal (DE)**

• **Eichholz, Christian**
**68165 Mannheim (DE)**
• **Zipplies, Matthias**
**67434 Neustadt (DE)**
• **Klumpe, Markus**
**68163 Mannheim (DE)**
• **Henrich, Wolfgang**
**67454 Hassloch (DE)**
• **Meier, Nicole**
**68307 Mannheim (DE)**
• **Hungenberg, Klaus-Dieter**
**69488 Birkenau (DE)**
• **Klink Carsten**
**67591 Offstein (DE)**

(54) **Schmelzekonfektionierung mittels laminaren Strahlzerfalls**

(57) Die vorliegende Erfindung betrifft Vorrichtungen und Verfahren zur Schmelzekonfektionierung mittels laminaren Strahlzerfalls. Insbesondere betrifft die vorliegende Erfindung Vorrichtungen zur Herstellung von Partikeln aus Schmelzen innerhalb eines Gasraumes, umfassend mindestens einen Schmelzeverteilerkörper mit mindestens einer Schmelzezuführung, mindestens einem Schmelzekanal und einer Verteilerplatte mit einem oder mehreren Löchern. Die vorliegende Erfindung betrifft ferner Verfahren zur Herstellung von Partikeln aus Schmelzen innerhalb eines Gasraumes unter Einsatz der erfindungsgemäßen Vorrichtungen.

Figur 1

EP 2 735 364 A1

**Beschreibung**

Die vorliegende Erfindung betrifft Vorrichtungen und Verfahren zur Schmelzekonfektionierung mittels laminaren Strahlzerfalls. Insbesondere betrifft die vorliegende Erfindung Vorrichtungen zur Herstellung von Partikeln aus Schmelzen innerhalb eines Gasraumes, umfassend mindestens einen Schmelzeverteilerkörper mit einer Schmelzezuführung, einem Schmelzekanal und einer Verteilerplatte mit einem oder mehreren Löchern. Die vorliegende Erfindung betrifft ferner Verfahren zur Herstellung von Partikeln aus Schmelzen innerhalb eines Gasraumes unter Einsatz der erfindungsgemäßen Vorrichtungen.

Zur Herstellung von Partikeln aus Schmelzen innerhalb eines Gasraumes muss zunächst eine Zerteilung der ursprünglich kontinuierlichen Schmelze in einzelne Tropfen erfolgen, welche dann nachfolgend durch Abkühlung und Wärmeentzug zu festen Partikeln erstarren. Die Erzeugung der Tropfen erfolgt dabei typischerweise mit Hilfe von Sprühdüsen. Dabei wird zwischen Ein- und Mehrstoffdüsen unterschieden.

Im Falle von Einstoffdüsen wird die Schmelze mit einem hohen Druck beaufschlagt und durch eine Düsenbohrung gepresst. Gegebenenfalls wird der Schmelzestrom vor dem Eintritt in die Düsenbohrung mit Hilfe geeigneter geometrischer Einbauten verdrallt. Sofern keine Verdrallung vorliegt, zerfällt der Schmelzestrahl auf Grund der Reibung zwischen umgebender Gasphase und Schmelzestrahl durch Aufwellung der Strahloberfläche in Einzeltropfen. Dieser Mechanismus wird als turbulenter Strahlzerfall bezeichnet. Nachteilig bei der Tropfenerzeugung durch turbulenten Strahlzerfall ist, dass eine sehr breite Tropfengrößenverteilung entsteht, so dass auch die nach der Schmelzeerstarrung resultierenden Partikel eine entsprechend breite Durchmesserverteilung aufweisen. Ferner ist nachteilig, dass für diesen Mechanismus sehr hohe Vordrücke benötigt werden und sich daraus sehr hohe Strahlaustrittsgeschwindigkeiten aus der Düse ergeben. Hohe Strahlgeschwindigkeiten wiederum bergen die Gefahr eines frühzeitigen Wandkontaktes der noch nicht vollständig erstarrten Schmelzetropfen mit Apparatewandungen und können daher zu Belagsbildung und häufig notwendiger Reinigung des Apparates führen. Weiterhin ist nachteilig, dass im Falle des turbulenten Strahlzerfalles eine Übertragung des Zerstäubungsprozesses auf einen größeren Produktionsmaßstab schwierig ist, weil mit zunehmender Düsengröße auch zunehmend große Tropfen entstehen und dieser Effekt durch eine Erhöhung des Vordruckes kompensiert werden muss.

Im Falle der Verdrallung des Schmelzestromes vor der Düsenöffnung bildet sich nach der Düse zunächst ein rotationssymmetrischer, kegelförmiger Flüssigkeitsfilm aus. Dieser zerfällt dann weiter stromab der Düse in einzelne Ringe, die sich auf Grund des Dralls radial ausdehnen und dann schließlich in Einzeltropfen zerfallen. Nachteilig bei dieser Methode der Tropfenerzeugung ist, dass der Kegelwinkel des Flüssigkeitsfilmes relativ groß ist, typischerweise zwischen 40° und 120°, was wiederum dazu führen kann, dass Tropfen auf Grund ihrer relativ zur Apparateachse schrägen Flugbahn frühzeitig die Apparatewand erreichen und wie beim turbulenten Strahlzerfall zu Belagsbildung führen. Problematisch ist bei dieser Methode auch die Skalierung auf einen größeren Produktionsmaßstab, weil die Größe der entstehenden Tropfen wieder vom Durchmesser der Düsenbohrung abhängt und zur Beibehaltung des Tropfendurchmessers im Falle von größeren Maßstäben wiederum eine Erhöhung der Austrittsgeschwindigkeit notwendig ist, was zu denselben Nachteilen wie beim turbulenten Strahlzerfall führt. Außerdem wird die Breite der Tropfengrößenverteilung mit zunehmender Austrittsgeschwindigkeit größer, so dass es bei der Maßstabsübertragung schwierig ist, die gewünschte Partikelgrößenverteilung konstant zu halten.

Im Falle von Mehrstoffdüsen wird die für den Strahlzerfall nötig Energie nicht durch den Schmelzestrom selbst bereitgestellt. Vielmehr wird parallel zum Schmelzestrom mindestens ein weiterer (gasförmiger) Strom geführt, der über eine zweite Düsenöffnung, meist ein konzentrisch angeordneter Ring, aus der Düse austritt. Auf Grund der Differenzgeschwindigkeit zwischen dem Schmelzestrom und dem parallel geführten (Gas-)strom erfolgt wieder ein Strahlzerfall in Einzeltropfen ähnlich wie im Falle des turbulenten Strahlzerfalles. Nachteilig ist hier wiederum, dass die entstehenden Tropfen auf Grund des Impulses des Gasstromes sehr hohe Geschwindigkeiten besitzen und daher Apparatewände frühzeitig erreichen. Ferner ist nachteilig, dass das sich einstellende Tropfendurchmesserspektrum relativ breit ist und dass Mehrstoffdüsen entsprechend komplizierter im Aufbau sind. Ein Beispiel eines Mehrstoffdüsensystems, welches auf eine möglichst gleichmäßige Tropfengröße abzielt, ist in DE 10015109 A1 dargestellt.

Verfahren zur Herstellung von Pellets aus flüssigen Kohlenwasserstoffen in einen flüssigkeitsgefüllten Raum mithilfe von perforierten Pelletierungsplatten sind beschrieben in DE 2601145 A1. Jedoch ist mit diesen Verfahren eine gezielte Einstellung der Tropfengröße schwierig, insbesondere wenn kleine Tropfen gewünscht sind.

Ein weiteres Verfahren zur Herstellung von Partikeln aus einer Flüssigkeit mittels einer perforierten Platte ist beschrieben in DE 1803724 A1. Die darin beschriebenen Vorrichtungen haben jedoch den Nachteil, dass zum einen eine gezielte Tropfengrößeneinstellung aufwendig ist, und zum anderen die Wände der Apparatewandung schnell beschlagen werden, was eine häufige Reinigung notwendig macht.

Bisher eingesetzte Systeme zur Herstellung von Partikeln (Konfektionierung) aus Schmelzen haben demzufolge den Nachteil, dass sie zu einer breiten Tropfendurchmesserverteilung oder zur vermehrten Produktion von Satellitentropfen neigen, hohe Vordrücke benötigen, durch frühzeitigen Wandkontakt der Apparatewandung zu Belägen führen, und/oder eine gezielte Tropfengrößeneinstellung schwer möglich ist.

Diese Probleme wurden durch die vorliegende Erfindung gelöst wie in der Beschreibung, den Beispielen und den Ansprüchen dargelegt.

Die vorliegende Erfindung betrifft eine Vorrichtung zur Herstellung von Partikeln aus Schmelzen innerhalb eines Gasraumes, umfassend mindestens einen Schmelzeverteilerkörper, wobei der Schmelzeverteilerkörper

(a) mindestens eine Schmelzezuführung;
(b) mindestens einen Schmelzekanal; und
(c) mindestens eine Verteilerplatte mit einem oder mehreren Löchern umfasst.

Bei der vorliegenden Erfindung erfolgt die Konfektionierung von Schmelzen mit Hilfe des Mechanismus des laminaren Strahlzerfalls. Hierbei erfolgt die Tropfenbildung weder auf Grund des Impulses oder der Verdrallung des Schmelzestromes noch auf Grund des Impulses eines parallelgeführten Gasstromes. Vielmehr wird erfindungsgemäß die Schmelze durch eine bestimmte Anzahl kleiner Löcher in einer Verteilerplatte geschickt und der Effekt genutzt, dass sich der austretende Strahl auf Grund von Oberflächenspannungskräften in periodischen Abständen kontrahiert, was schließlich zu dessen Zerfall in Einzeltropfen führt. Der hierbei angewandte Vordruck beträgt im Zusammenhang mit der vorliegenden Erfindung bis zu 100 bar, bevorzugt 1 bis 50 bar, besonders bevorzugt 1 bis 15 bar. Dabei hängt der Druckverlust von der Geometrie der Lochplattenbohrungen, der Reynoldszahl der Strömung in den Bohrungen und der Strömungsgeschwindigkeit in den Bohrungen gemäß der Beziehung

$$\Delta p = \left[\left(\frac{1}{\alpha}-1\right)^2 + (1-\phi)^2 + \frac{64}{\text{Re}}\cdot\frac{s}{d}\right]\cdot\frac{\rho\cdot u^2}{2} \quad \text{(Formel (1))}$$

$\Delta p$ :  Druckverlust [Pa]
$\alpha$ :  Strahlkontraktion im Bohrungseintritt [-]
$\phi$ :  Verhältnis von freien Strömungsquerschnitt der Lochplatte zur Gesamtlochplattenfläche [-]
Re:  Reynoldszahl der Strömung durch die Bohrung [-]
$s$ :  Bohrungslänge [m]
$d$ :  Bohrungsdurchmesser [m]
$\rho$ :  Fluiddichte [kg/m$^3$]
$u$ :  Mittlere Strömungsgeschwindigkeit in der Bohrung [m/s]

ab (VDI-Wärmeatlas 3.0, Abschnitte Lab und Lag, ISBN 978-3-540-29646-1). Die Reynoldszahl (Re) der Bohrungsströmung wird dabei gemäß

$$\text{Re} = \frac{\rho\cdot u\cdot d}{\eta} \quad \text{(Formel (2))}$$

$\eta$ :  Dynamische Fluidviskosität [Pas]

ermittelt. So ergibt sich beispielsweise für eine typische mittlere Strömungsgeschwindigkeit in der Bohrung von 5 m/s, einer Viskosität von 0.1 Pas und einem Bohrungsdurchmesser von 200μ m sowie einer Bohrungslänge von 1 mm ein Druckverlust von ca. 4.1 bar. Die Viskosität ist dabei fluidspezifisch und kann stark von der Temperatur abhängen.

Die Größe der dabei entstehenden Tropfen ergibt sich bei nicht zu hohen Austrittsgeschwindigkeiten dabei direkt aus dem Durchmesser der Austrittsbohrung, wobei die Beziehung

$$d_T = 1.89\cdot\left(1+\frac{3\cdot\eta}{\sqrt{\rho\cdot\sigma\cdot d}}\right)^{\frac{1}{6}}\cdot d \quad \text{(Formel (3))}$$

σ:    Grenzflächenspannung des Fluides [N/m]

das Verhältnis von Tropfendurchmesser $d_T$ und Bohrungsdurchmesser d festlegt (Arthur H. Lefebvre: Atomization and Sprays, Combustion: An International Series, Hemisphere Publishing Corporation 1989, ISBN 0-89116-603-3, pp. 27-72). Formel (3) gilt hierbei sowohl für Fluide niedriger als auch Fluide mit hoher Viskosität, sofern die Fluide keine viskoelastischen Eigenschaften aufweisen. Die maximale Austrittsgeschwindigkeit, bis zu der ein laminarer Strahlzerfall vorliegt und damit die Formel (3) für die Berechnung des Tropfendurchmesser herangezogen werden kann, kann vom Fachmann mit Hilfe des sogenannten Ohnesorg-Diagrammes aus den geometrischen Abmessungen der Bohrung und den Stoffdaten des Fluids ermittelt werden. Typischerweise liegt laminarer Strahlzerfall für

$$Oh < 100 \cdot \mathrm{Re}^{-0.92}$$

vor, wobei die Ohnesorgzahl Oh gemäß

$$Oh = \frac{\eta}{\sqrt{\rho \cdot \sigma \cdot d}}$$

definiert ist.

Neben der Tropfengröße $d_T$ entstehen gemäß der vorliegenden Erfindung in massenmäßig geringem Umfang kleine Satellitentropfen. Vorteil des erfindungsgemäßen Einsatzes des laminaren Strahlzerfalles ist es unter anderem, dass abgesehen von dem geringen Umfang an Satellitentropfen eine praktisch monomodale Tropfengrößenverteilung entsteht und die Strahlaustrittsgeschwindigkeit relativ niedrig ist. Dies reduziert die Gefahr, dass Tropfen frühzeitig die Kammer- oder Apparatewandung erreichen und zu Belagsbildung führen. Darüber hinaus vorteilhaft ist, dass sich auf Grund des monomodalen Charakters der Tropfengrößenverteilung keine unerwünscht großen Tropfen bilden, die zur Erstarrung relativ lange benötigen und damit auch zur Belagsbildung beitragen können. Des Weiteren kann, wie hierin dargelegt, erfindungsgemäß die Austrittsrichtung des Schmelzestrahles genau festgelegt werden, so dass ein frühzeitiger Kontakt von Schmelzetropfen mit der Apparatewand auf Grund einer Tropfenbewegungsrichtung schräg zur Kammer- oder Apparateachse vermieden werden kann. Auch die Skalierung der Tropfenerzeugung auf einen größeren Produktionsmaßstab ist einfach, da dieser nur durch eine Vergrößerung der entsprechenden Bohrungszahl erreicht wird und in einem gewissen Umfang durch eine Erhöhung der Austrittsgeschwindigkeit und damit verbunden des Massestrom pro Bohrung. Sofern keine monomodale Tropfengrößenverteilung erwünscht ist, erlaubt die vorliegende Erfindung auch, maßgeschneiderte Partikelgrößenverteilungen einfach zu erzeugen. Dazu verwendet man entweder Verteilerplatten mit Löchern unterschiedlichen Durchmessers, so dass sich aus dem Spektrum der Lochdurchmesser das Spektrum der Tropfendurchmesser ergibt, oder aber man kombiniert verschiedene Verteilerplatten, die jeweils einen konstanten aber von den anderen Verteilerplatten unterschiedlichen Lochdurchmesser haben. Auch können Verteilerplatten mit Löchern unterschiedlichen Durchmessers verwendet werden.

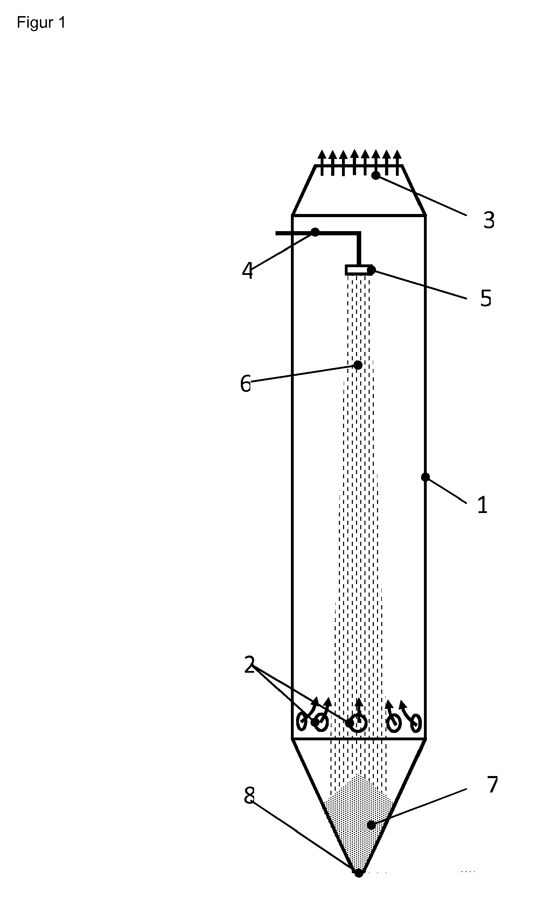

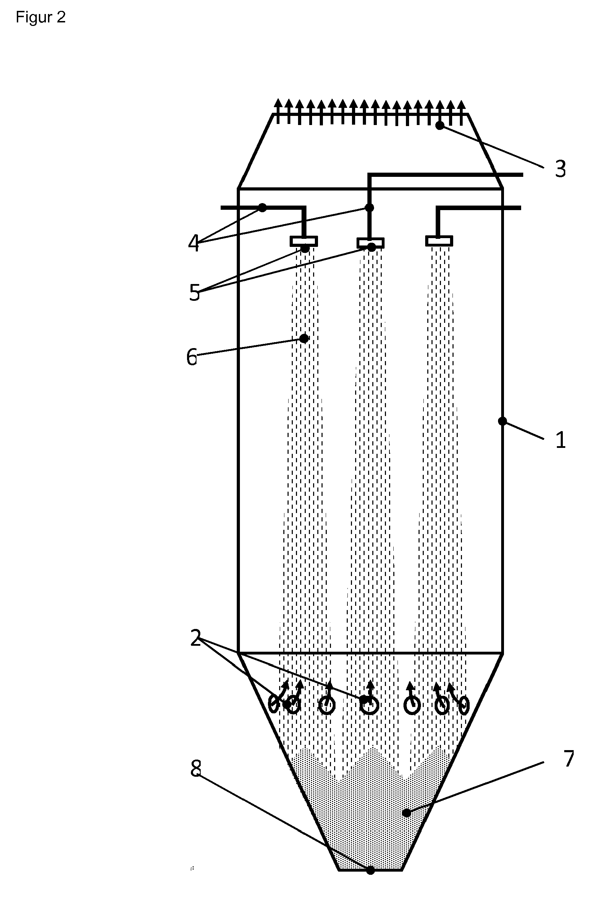

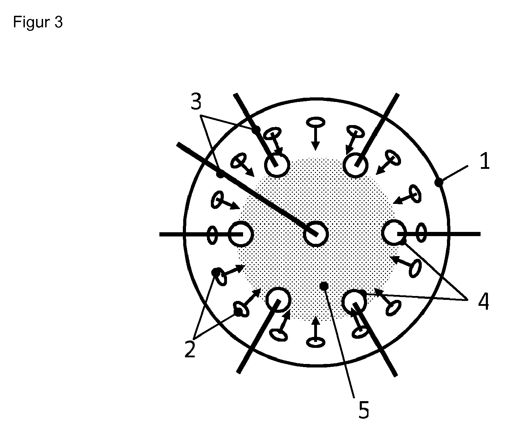

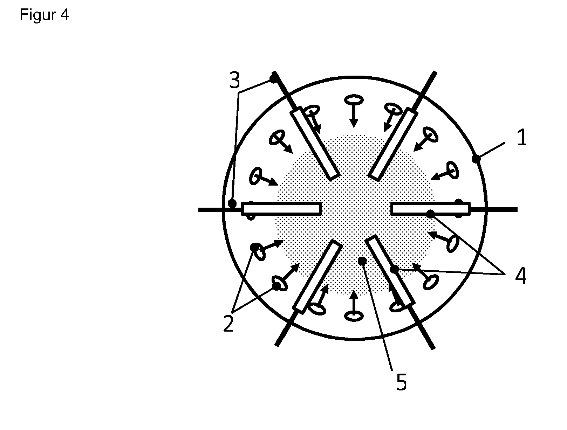

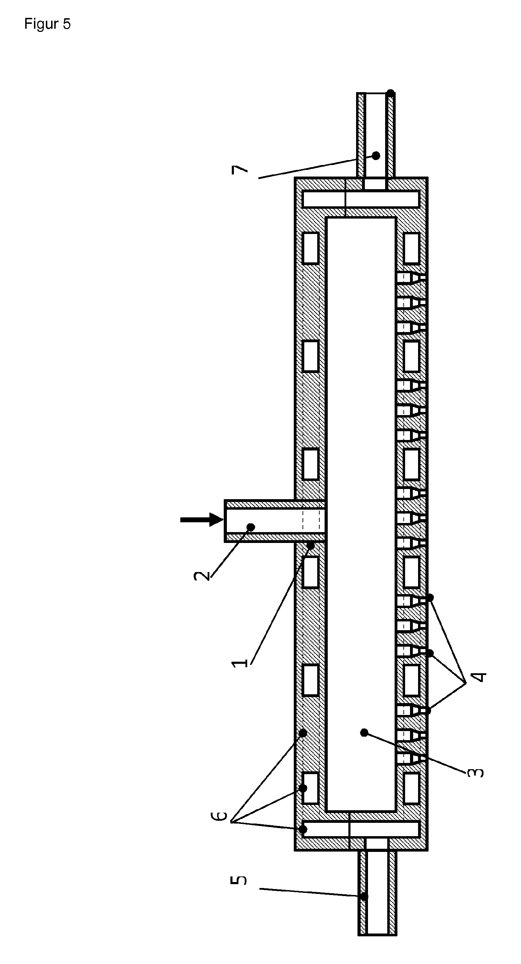

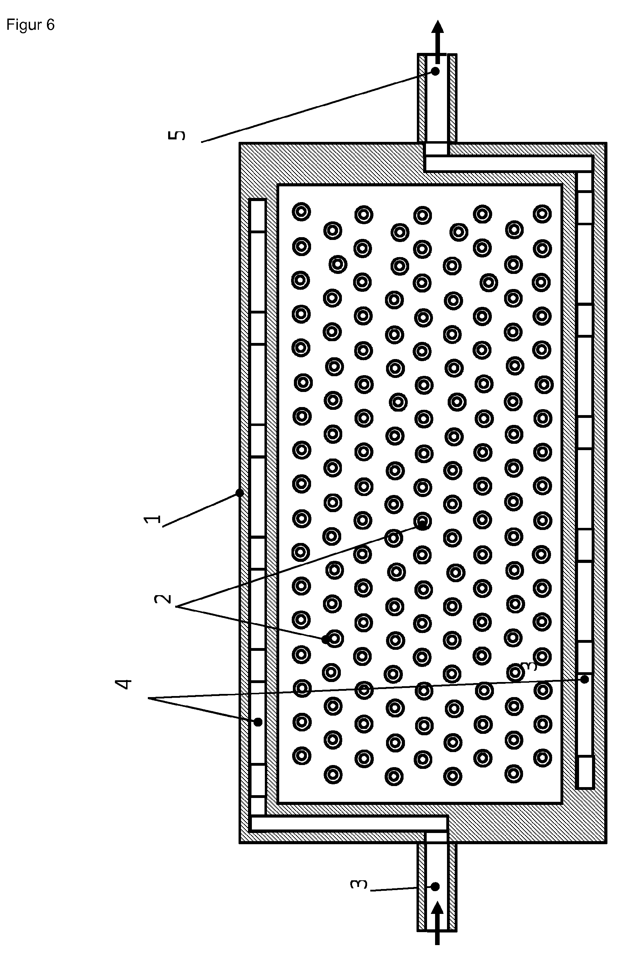

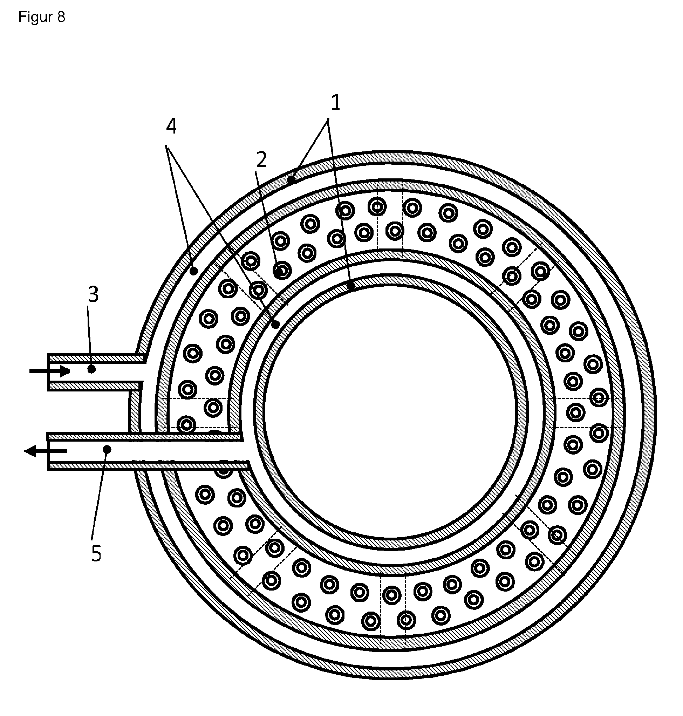

Durch entsprechende geometrische Gestaltung der Verteilerplatten, in denen die Löcher sitzen, kann schließlich gezielt eingestellt werden, wie die Verteilung der entstehenden Tropfen sein soll. Durch einen oder mehrere Verteilerplatten kann dann durch geeignete Anordnung der Verteilerplatten und geeignete Wahl von deren Geometrie der Kammer- oder Apparatequerschnitt für die Schmelzeerstarrung optimal ausgenutzt werden. Die Figuren 1 bis 8 zeigen mögliche Anordnungen sowie bevorzugte Formgebungen der erfindungsgemäßen Schmelzeverteilerkörper bzw. einzelner Bestandteile davon. Dieser Aspekt ist insbesondere dann wichtig, wenn eine Kühlgasführung in der Kammer bzw. im Apparat entgegen der Tropfenbewegung eingesetzt wird. In diesem Fall würde eine konzentrierte Bildung der Tropfen in einem Teil des Kammer- oder Apparatequerschnittes zu einem deutlich Ausweichen der Gasströmung gegenüber dem Tropfenstrom führen, so dass keine optimale Abkühlung der Tropfen erfolgen kann und die Kühlkapazität des Apparates nicht voll ausgenutzt wird.

Da beim erfindungsgemäßen Einsatz des laminaren Strahlzerfalles zur Herstellung von Tropfen die Lochdurchmesser auf Grund der Beziehung nach Formel (3) meist recht klein sind und daher zu Verstopfungen neigen können, sind die erfindungsgemäßen Vorrichtungen in einer bevorzugten Ausführungsform mit Filtern ausgestattet. In der Schmelze eventuell vorhandene feste Partikel, die zu einer Blockierung der Löcher führen können, werden durch entsprechende vorgeschaltete oder unmittelbar nachgeschaltete Filter zurückgehalten. Dabei haben die Filter eine Maschenweite, die bevorzugt 5 bis 75% des Lochdurchmessers entsprechen, besonders bevorzugt beträgt die Maschenweite 10 bis 60% des Bohrungsdurchmesser, insbesondere 15 bis 40%.

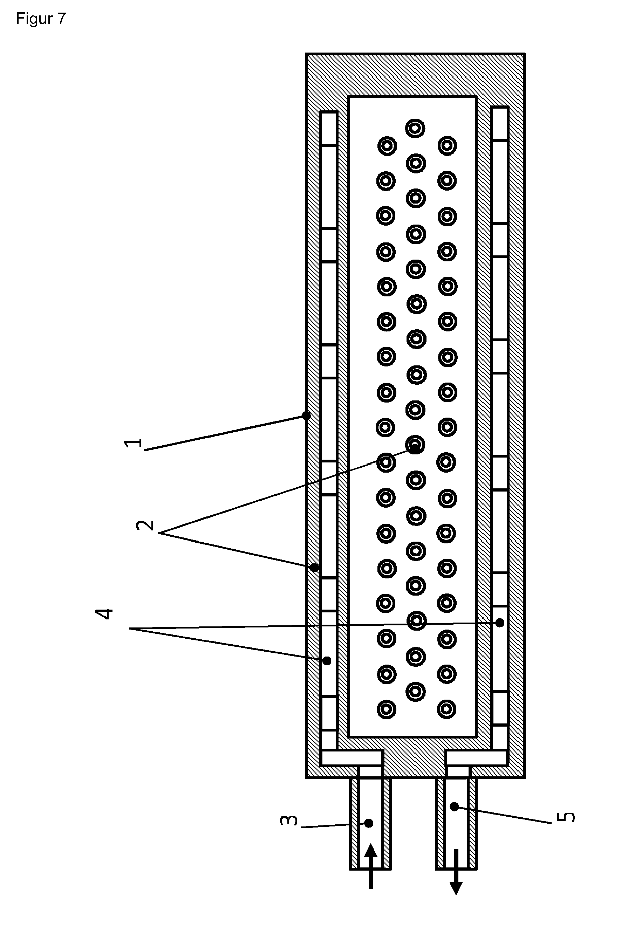

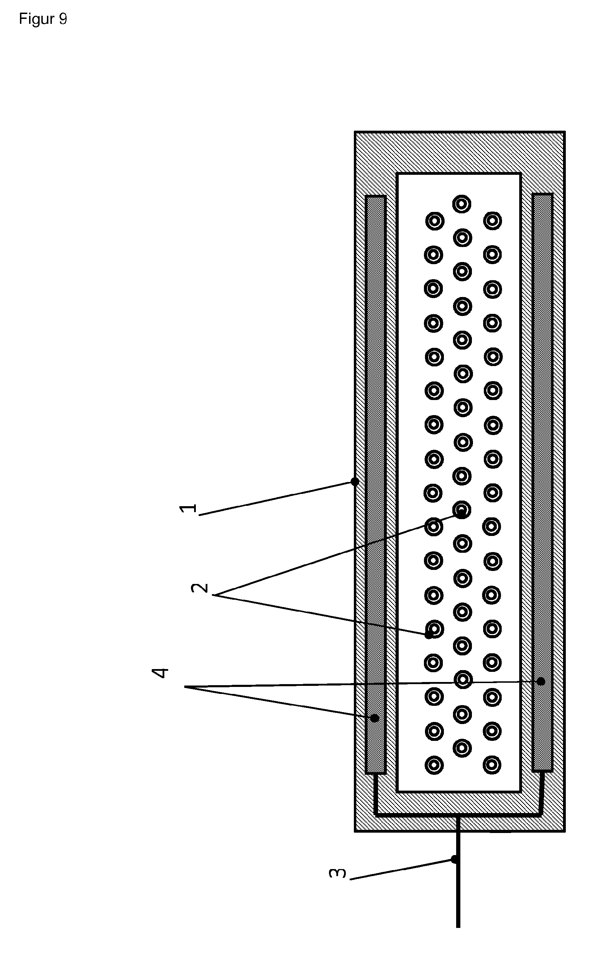

Ferner kann im Zusammenhang mit der vorliegenden Erfindung das Zufrieren der Bohrungslöcher durch eine geeignete Begleitbeheizung der Verteilerplatte, welche die Löcher beinhaltet, erreicht werden. Die vorliegende Erfindung umfasst also auch Vorrichtungen mit solchen Begleitheizungen. Die Figuren 7 und 9 zeigen mögliche Ausführungsformen einer solchen Begleitbeheizung für den Fall einer linienförmigen Verteilerplatte. Die Beheizung kann dabei elektrisch oder über ein Heizmedium (z.B. Öl oder flüssiges Wasser oder Dampf) erfolgen. Die Heizelemente oder Kanäle müssen dabei so angeordnet sein, dass die Temperatur in der gesamten Verteilerplatte möglichst homogen ist. Die räumliche Schwankung der Temperatur in der Verteilerplatte sollte dabei kleiner als 30 K, bevorzugt kleiner als 20 K, besonders bevorzugt kleiner 10 K sein, um möglichst einheitliche Vertropfungsbedingungen über der gesamten Verteilerplatte zu gewährleisten. Insbesondere darf eine fluidspezifische Minimaltemperatur an keiner Stelle der Verteilerplatte unterschritten werden, da sonst mit einem lokalen oder unter Umständen auch globalen Zufrieren der Verteilerplatte zu rechnen ist. Die bei der Schmelzekonfektionierung möglicherweise auftretenden Beläge können erfindungsgemäß durch eine Begleitbeheizung des gesamten Schmelzeverteilerkörper bzw. der Verteilerplatte vermieden werden. Ferner kann gemäß der vorliegenden Erfindung durch ein starkes, vom jeweiligen Produkt abhängiges periodisches Hochheizen des Schmelzeverteilerkörpers bzw. der Verteilerplatte erreicht werden, dass bereits gebildete Beläge und Lochverstopfungen vollständig abgeschmolzen werden.

Weiterhin kann die Bildung der Tropfen mit Hilfe des laminaren Strahlzerfalls dadurch gefördert werden, dass die Verteilerplatte der erfindungsgemäßen Vorrichtung durch ein Gerät mit einer Frequenz, die der Tropfenablöse-Frequenz aus dem Freistrahl entspricht, in Schwingung versetzt wird. Dabei sollten in einer Ausführungsform der erfindungsgemäßen Vorrichtung die Bohrlänge, Größe und Form für unterschiedlich Austrittslochdurchmesser auf einer oder mehreren Verteilerplatten der erfindungsgemäßen Vorrichtung so gewählt werden, dass sich immer dieselbe Tropfenablösefrequenz ergibt. Auch kann dies durch Reduzierung der mittleren Strömungsgeschwindigkeit im Falle der Löcher mit größerem Durchmesser erreicht werden, wobei die Reduzierung der Strömungsgeschwindigkeit durch eine größere Bohrungslänge oder durch eine deutlich reduzierten Bohrungsquerschnitt vor der eigentlich Bohrungsmündung in den Gasraum erreicht werden kann.

Der Schmelzeverteilerkörper der erfindungsgemäßen Vorrichtung ist dabei üblicherweise innerhalb einer Kammer angeordnet wie in den Figuren 1 bis 4 bespielhaft zu sehen.

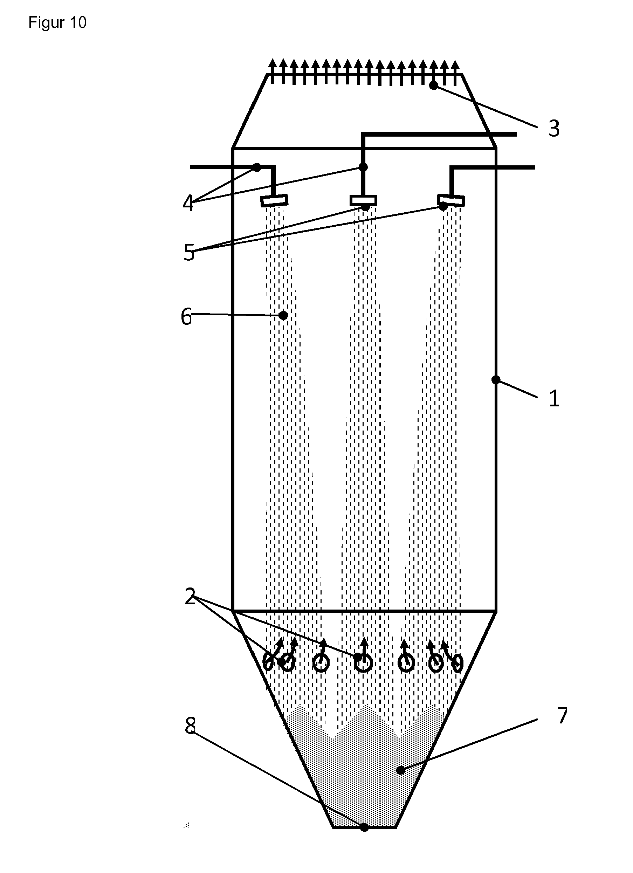

Die Verteilerplatte oder die Verteilerplatten der erfindungsgemäßen Vorrichtung sind in einer Ausführungsform so innerhalb des Schmelzeverteilerkörpers zueinander angeordnet, dass die austretenden Tropfen eine senkrechte oder nahezu senkrechte Flugbahn in Richtung des Bodens der Kammer beschreiben, so dass die Kammer- oder Apparatewandung nicht oder möglichst wenig von den Tropfen beschlagen wird. Im Falle kleiner Tropfen, die durch turbulente Dispersion von ihrer senkrechten Flugbahn abgelenkt werden, können die Löcher der Verteilerplatte dabei in einem nach innen zeigenden Winkel angeordnet werden, wie in Figur 10 beispielhaft gezeigt ist. Für den Winkel ist hierbei unter anderem neben dem Schmelzetyp insbesondere der Lochdurchmesser auf der Verteilerplatte, der Kammerdurchmesser, ein etwaiger Gegenstrom eines Gases von unten und gegebenenfalls auch Temperatur der Schmelze und Vordruck zu berücksichtigen. Bevorzugt beträgt dieser Winkel relativ zur Senkrechten 0 bis 20°, besonders bevorzugt 0 bis 15°, insbesondere 0 bis 10°. Eine genaue Festlegung des Winkels kann durch den Fachmann mit Hilfe von Strömungssimulationsberechnungen erfolgen. Alternativ kann auch eine einzelne Verteilerplatte in sich gewinkelt sein oder mehrere Schmelzeverteilerkörper umfassend die Verteilerplatten in entsprechenden Winkeln zueinander angeordnet sein. Der Winkel der Verteilerplatten zueinander oder der Winkel innerhalb einer Verteilerplatte kann hierbei bevorzugt 20°, besonders bevorzugt 15°, insbesondere 10° betragen. Alternativ kann der Winkel der Verteilerplatte relativ zur Kammer- oder Apparatewandung bevorzugt 0° bis 20°, besonders bevorzugt 0° bis 15°, insbesondere 0 bis 10° betragen. Alle Winkel verstehen sich hier als positiv, wenn die Strahlrichtung und die Parallele zur entsprechenden nächsten Wand voneinander weg weisen.

Die erfindungsgemäße Vorrichtung kann ferner mindestens eine elektrische Beheizung und/oder mindestens eine Heizmediumverteilerplatte umfassen. Diese Heizmediumverteilerplatte umfasst mindestens eine Heizmediumzuführung, mindestens eine Heizmediumabführung, mindestens einen Heizmediumkanal, und - optional - mindestens einen Schmelzekanal zur Verteilerplatte, durch den die Schmelze zu den Löchern in der Verteilerplatte hindurch fließen kann. Der Abstand der Heizmediumkanäle voneinander von der Außenseite der Verteilerplatte darf einen Maximalwert nicht überschreiten, da sonst mit Temperaturungleichverteilungen zu rechnen ist. Der zulässige Maximalwert hängt dabei von der Wärmeleitfähigkeit des Verteilerplattenmaterials, dem Wärmeübergang zwischen Verteilerplatte und umgebender Gasströmung, der Temperaturdifferenz zwischen Gasraum und durch die Bohrung strömendem Fluid sowie der maximal tolerierbaren räumlichen Temperaturschwankungen in der Platte ab. Das Verhältnis $r_{max}$ von Wärmeleitfähigkeit $\lambda$ der Verteilerplatte zu Maximalabstand zwischen den Heizkanälen bzw. zwischen den Heizkanälen und der Plattenoberfläche

$$r_{max} = \frac{\lambda}{s}$$

sollte dabei > 300 W/m²K, bevorzugt > 500 W/m²K und besonders bevorzugt > 700 W/m²K sein. Die erfindungsgemäße Vorrichtung kann, wie bereits dargelegt, ferner mit einem Gerät verbunden sein, welches die Verteilerplatte in Schwingung versetzt, deren Frequenz der Tropfenablösefrequenz dem aus der Verteilerplatte austretenden Freistrahl entspricht. Die Frequenz berechnet sich dabei aus der Beziehung

$$f = \frac{u}{\sqrt{2} \cdot \pi \cdot d \cdot \left(1 + \frac{3 \cdot \eta}{\sqrt{\rho \cdot \sigma \cdot d}}\right)^{0.5}} \, .$$

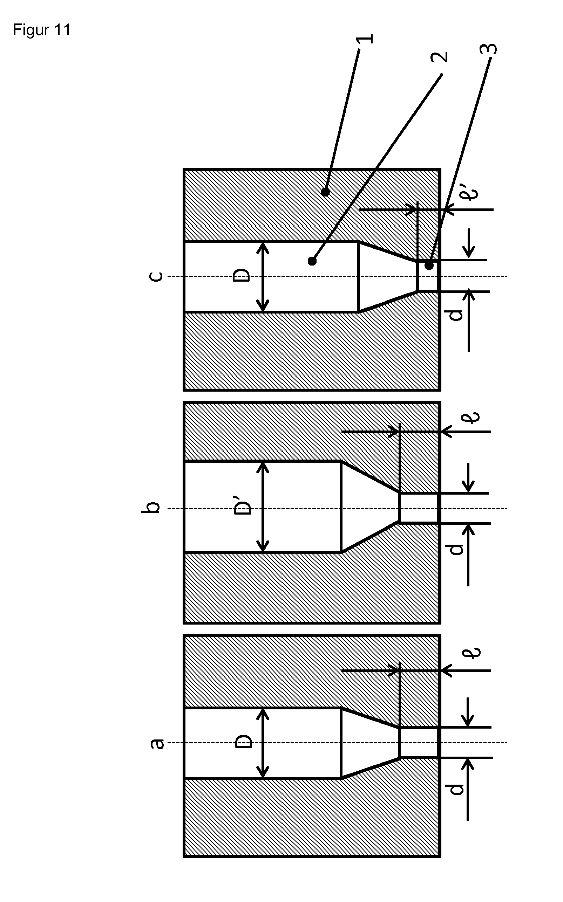

Die Löcher der Verteilerplatte der erfindungsgemäßen Vorrichtung können unterschiedliche Durchmesser haben. Der Durchmesser der Löcher richtet sich insbesondere nach dem zu vertropfenden Schmelzetyp bzw. dessen Viskosität sowie nach der gewünschten Partikelgröße. Typische Lochdurchmesser im Zusammenhang mit der vorliegenden Erfindung betragen von 50 bis 3000 μm, bevorzugt von 75 bis 1500 μm, besonders bevorzugt von 100 bis 750 μm. Es ist im Zusammenhang mit der vorliegenden Erfindung auch möglich, dass eine Verteilerplatte Löcher mit jeweils unterschiedlichen Durchmessern hat, um beispielsweise eine gewünschte Partikelgrößenverteilung zu erreichen. Sofern eine solche Verteilerplatte mit einem Gerät zur Schwingungsanregung ausgestattet ist, sollte sichergestellt werden, dass sich für die unterschiedlichen Bohrungsdurchmesser trotzdem immer dieselbe Tropfenablösefrequenz ergibt. Dies kann durch Erhöhung der mittleren Strömungsgeschwindigkeit im Falle der Löcher mit größerem Durchmesser erreicht werden, wobei die Anpassung der Strömungsgeschwindigkeit durch Wahl der Bohrungslänge oder des Bohrungsquerschnitts vor der eigentlichen Bohrungsmündung in den Gasraum erreicht werden kann. Die Festlegung einer geeigneten Kombination von Bohrungslänge und Querschnitt kann vom Fachmann mit bekannten Berechnungsformeln einfach durchgeführt werden. Figur 11 illustriert die beiden Möglichkeiten. In einer Ausführungsform der erfindungsgemäßen Vorrichtung sollten die Bohrlänge, Größe und Form für unterschiedlich Austrittslochdurchmesser auf einer oder mehreren Verteilerplatten der erfindungsgemäßen Vorrichtung so gewählt werden, dass sich immer dieselbe Tropfenablösefrequenz ergibt.

Auch kann erfindungsgemäß ein Schmelzeverteilerkörper mindestens zwei Verteilerplatten umfassen, welche unterschiedliche Lochdurchmesser (sowohl jeweils innerhalb einer Verteilerplatte als auch zwischen Verteilerplatten mit jeweils homogenen Lochdurchmessern) besitzen. Eine erfindungsgemäße Vorrichtung kann auch zwei oder mehr solcher Schmelzeverteilerkörper umfassen, sowohl gleichartige als auch unterschiedliche solcher Schmelzeverteilerkörper, wobei die Schmelzeverteilerkörper jeweils mindestens eine Verteilerplatte umfassen, und wobei die Verteilerplatten jeweils unterschiedliche Lochdurchmesser aufweisen können.

Wie bereits beschrieben kann die erfindungsgemäße Vorrichtung auch einen Filter umfassen, durch welchen etwaige Verunreinigungen von den Löchern in den Verteilerplatten ferngehalten werden, um deren Verstopfen zu verhindern. Diese Filter können dabei der Schmelzezuführung des Schmelzeverteilerkörpers vorgeschaltet sein, oder unmittelbar nach der Schmelzezuführung befestigt sein. Wichtig ist, dass die Filter jeweils vor den Löchern der Verteilerplatten geschaltet sind. Die Filter sollten dabei eine Maschenweite aufweisen, die höchstens genauso groß ist wie die jeweils nachgeschalteten Löcher in den Verteilerplatten, um effektiv ein Verstopfen der Löcher zu verhindern oder zu reduzieren. Die Maschenweite des Filters beträgt dabei bevorzugt 5% bis 75%, besonders bevorzugt 10% bis 60%, und ganz besonders bevorzugt 15% bis 40% des Durchmessers des kleinsten dem Filter nachgeschalteten Loches.

Die vorliegende Erfindung betrifft ein Verfahren zur Herstellung von Partikeln aus Schmelzen innerhalb eines Gasraumes, umfassend folgende Schritte:

(α) Einführen einer Schmelze unter Druck in die Schmelzezuführung einer erfindungsgemäßen Vorrichtung wie hierin beschrieben, so dass durch die Löcher der Verteilerplatte Tropfen in einem Freistrahl austreten;
(β) Auffangen der nach (α) ausgetretenen Tropfen in einer Kammer.

Wie bereits dargelegt, richtet sich der Druck dabei nach verschiedenen Parametern, beispielsweise ist er abhängig von Schmelzetyp, Viskosität, Temperatur, gewünschter Partikelgröße, oder Geometrie der Verteilerplattenbohrungen. Im erfindungsgemäße Verfahren beträgt die Druckdifferenz gegenüber dem Gasraum, mit welchem die Schmelze in die Schmelzezuführung eintritt, beispielsweise 0,1 bis 100 bar, bevorzugt 0,5 bis 50 bar, besonders bevorzugt 1 bis 20 bar.

Gemäß dem erfindungsgemäßen Verfahren können die Tropfen aus den Löchern im Freifall in Richtung Boden einer Kammer fallen, während dessen sie abkühlen und zu Partikeln erstarren. Alternativ können die austretenden Tropfen nach (α) beim zu Boden fallen durch einen Gasgegenstrom gekühlt werden, wobei die Kühlung im Gegenstrom thermodynamisch günstiger und deshalb bevorzugt ist. Auch die Kühlung durch einen parallel zur Fallrichtung der Tropfen geleiteten Gasstrom ist nach dem erfindungsgemäßen Verfahren möglich.

In einer Ausführungsform des erfindungsgemäßen Verfahrens kann der Winkel der Verteilerplatten 0 bis 20, bevorzugt 0 bis 15°, besonders bevorzugt 0 bis 10° relativ zu der nächsten Kammer- oder Apparatewandung betragen, wobei ein positiver Winkel bedeutet, dass sich die Tropfen bei Austritt von der nächsten Kammer- oder Apparatewandung wegbewegen

Wie bereits dargelegt, ist die erfindungsgemäße Vorrichtung bzw. das erfindungsgemäße Verfahren besonders vorteilhaft zur Herstellung von Partikeln aus Schmelzen, wenn eine bestimmte monomodale Partikelgröße oder, besonders, eine bestimmte Partikelgrößenverteilung gewünscht ist. Die erfindungsgemäße Vorrichtung und das erfindungsgemäße Verfahren eignen sich in diesem Zusammenhang unter anderem für die Konfektionierung von Polyether- oder Harnstoffschmelzen, da die gewünschte Partikelgröße in einem Bereich liegt, der mit Hilfe des laminaren Strahlzerfalles im Hinblick auf die realisierbaren Bohrungsdurchmesser und Druckverlustes besonders gut realisierbar ist. Die erfindungsgemäße Vorrichtung ist daher in einer Ausführungsform geeignet zur Herstellung von Partikeln aus, die aus weitgehend reinen Polyethern oder Harnstoff bestehen oder nur zum Teil aus Polyethern und Harnstoff bestehen, und das erfindungsgemäße Verfahren wie hier dargelegt kann bevorzugt durchgeführt werden zur Herstellung von Partikeln aus weitgehend reinen Polyethern oder Harnstoff oder aus Mischungen von Polyethern mit weiteren Substanzen oder Mischungen von Harnstoff mit weiteren Substanzen.

Im Zusammenhang mit der hier dargestellten Erfindung, insbesondere bei den Termini "Schmelzeverteilerkörper",
Verteilerplatte", "Schmelzezuführung", "Schmelzekanal", "Loch", "Heizmediumverteilerplatte", "Heizmediumzuführung ", "Heizmediumabführung" und "Schmelzekanal", sind Plural und Singular analog zu verstehen. Ist beispielsweise von Löchern in einer Verteilerplatte die Rede, umfasst diese Formulierung etwa auch Löcher in Verteilerplatten oder nur ein Loch in einer Verteilerplatte.

## Figuren

| Figur 1 | **Apparat zur Schmelzekonfektionierung mit einem Vertropfer, Seitenansicht** 1: Apparatewand; 2: Kühlgaseinlässe; 3: Kühlgasauslass; 4: Schmelzezuführung; 5: Beheizte Vertropfervorrichtung; 6: Erstarrende, fallende Schmelzetropfen; 7: Erstarrte Partikel; 8: Partikelaustrag |
|---|---|
| Figur 2 | **Apparat zur Schmelzekonfektionierung mit mehreren Vertropfern, Seitenansicht** 1: Apparatewand; 2: Kühlgaseinlässe; 3: Kühlgasauslass; 4: Schmelzezuführung; 5: Vertropfervorrichtungen; 6: Erstarrende, fallende Schmelzetropfen; 7: Erstarrte Partikel; 8: Partikelaustrag |
| Figur 3 | **Apparat zur Schmelzekonfektionierung mit mehreren Vertropfern. Ansicht von oben** 1: Apparatewand; 2: Kühlgaseinlässe; 3: Schmelzezuführung; 4: Vertropfervorrichtungen; 5: Erstarrte Partikel im Bodenbereich des Apparates |
| Figur 4 | **Apparat zur Schmelzekonfektionierung mit mehreren, linienförmigen Vertropfern, Ansicht von oben** 1: Apparatewand; 2: Kühlgaseinlässe; 3: Schmelzezuführung; 4: Linienförmige Vertropfervorrichtungen; 5: Erstarrte Partikel im Bodenbereich des Apparates |
| Figur 5 | **Vertropfereinheit mit mehreren Schmelzeaustrittsöffnungen und Heizkanälen, Seitenansicht** 1: Vertropferwand; 2: Schmelzezuführung; 3: Schmelzeverteilkanal; 4: Schmelzeaustrittsöffnungen; 5: Heizmediumzuführung; 6: Heizkanäle; 7: Heizmediumaustritt |
| Figur 6 | **Rechteckige Vertropfereinheit mit mehreren Schmelzeaustrittsöffnungen und Heizkanälen, Querschnitt von oben gesehen** 1: Vertropferwand; 2: Schmelzeaustrittsöffnungen; 3: Heizmediumzuführung; 4: Heizkanäle; 5: Heizmediumaustritt |
| Figur 7 | **Linienförmige Vertropfereinheit mit mehreren Schmelzeaustrittsöffnungen und Heizkanälen, Querschnitt von oben gesehen** 1: Vertropferwand; 2: Schmelzeaustrittsöffnungen; 3: Heizmediumzuführung; 4: Heizkanäle; 5: Heizmediumaustritt |
| Figur 8 | **Ringförmige Vertropfereinheit mit mehreren Schmelzeaustrittsöffnungen und Heizkanälen, Querschnitt von oben gesehen** 1: Vertropferwand; 2: Schmelzeaustrittsöffnungen; 3: Heizmediumzuführung; 4: Heizkanäle; 5: Heizmediumaustritt |

| Figur 9 | **Linienförmige Vertropfereinheit mit mehreren Schmelzeaustrittsöffnungen und elektrischer Beheizung, Querschnitt von oben gesehen** 1: Vertropferwand; 2: Schmelzeaustrittsöffnungen; 3: Stromversorgung; 4: Elektrische Heizpatronen |
| Figur 10 | **Apparat zur Schmelzekonfektionierung mit mehreren, teilweise geneigten Vertropfern, Seitenansicht** 1: Apparatewand; 2: Kühlgaseinlässe; 3: Kühlgasauslass; 4: Schmelzezuführung; 5: Teilweise geneigte Vertropfervorrichtungen; 6: Erstarrende, fallende Schmelzetropfen; 7: Erstarrte Partikel; 8: Partikelaustrag |
| Figur 11 | **Maßnahmen zur Erhöhung der Strömungsgeschwindigkeit bei vorgegebenem Austrittsbohrungsdurchmesser d** |
| (a) | Geometrie ohne Erhöhung der Strömungsgeschwindigkeit |
| (b) | Geometrie mit erhöhter Austrittsgeschwindigkeit durch Vergrößerung des Vorbohrungsdurchmesser von D auf D' |
| (c) | Geometrie mit erhöhter Austrittsgeschwindigkeit durch Verkürzung der Mündungsbohrungslänge von $\ell$ auf $\ell$' |

Die vorliegende Erfindung wird durch nachfolgendes Beispiel noch weiter verbildlicht, ohne jedoch darauf beschränkt zu sein.

**Beispiel**

Die Konfektionierung einer Polyetherschmelze bestehend aus Polyethylenglykol mit einer zahlengemittelten Molmasse von ca. 1500 g/mol und einer Erstarrungstemperatur von 30 °C sowie einer Erstarrungsenthalpie von ca. 200 kJ/kg wird in einem Sprühturm durchgeführt, der eine Höhe von ca. 20 m und einen Innendurchmesser von ca. 2,5 m besitzt. Das untere Viertel des Turmes ist konisch geformt und am unteren Ende des Konus befindet sich eine Zellradschleuse, über die die erstarrten Polymerpartikel ausgetragen werden. Zur Abkühlung und Erstarrung der Schmelzetropfen wird über Öffnungen im Konus kalte Luft mit einer Temperatur von -10 °C in den Turm eingespeist. Die Luftmenge beträgt dabei ca. 14000 kg/h. Die erwärmte Luft verlässt den Turm über den Turmkopf und wird über einen ausliegenden Wärmetauscher zurückgekühlt und dem Turm wieder zugeführt.

Ursprünglich wurde die Zerstäubung der Schmelze mit Hilfe einer Zweistoffsprühdüse durchgeführt. Dabei wurde eine Schmelzetemperatur von 63°C eingestellt, bei der die Schmelzeviskosität ca. 100 mPas beträgt. Die Zweistoffsprühdüse erzeugte dabei Tropfen, die einen Durchmesser von ca. 100 bis 1000 $\mu$m besaßen. Der massengemittelte Durchmesser betrug dabei ca. 400 $\mu$m. Der Sprühwinkel der Sprühdüse betrug ca. 40° und die Tropfenaustrittsgeschwindigkeit ergab sich anhand einer rechnerischen Abschätzung zu ca. 60 m/s. Die Sprühdüse war zentrisch 1,5 m unterhalb des Turmkopfes angebracht.

Mit der beschriebenen Konfiguration konnte eine Schmelzemenge von ca. 1500 kg/h konfektioniert werden, wobei es zu einer fortlaufenden Belagsbildung kam, die eine Abreinigung der Turmwand in einem Abstand von 2-3 Wochen erforderlich machte. Höhere Durchsätze führten zu einer deutlichen Erhöhung der Belagsbildung und damit zu einer Verkürzung des Reinigungsintervalls.

Im Rahmen einer Umbaumaßnahme wurde die zentrisch angeordnete Sprühdüse durch drei Vertropferplatten ersetzt, die auf einem Kreis mit einen Durchmesser von 1100 mm angebracht sind und um einem Winkel von 120° versetzt zueinander angeordnet sind. Die vertikale Position der Vertropferplatten ist dabei dieselbe wie die der Sprühdüse. Die Vertropferplatten sind kreisförmig verfügen über je 1000 Bohrungen mit einem Durchmesser von 200 $\mu$m. Der Durchmesser der Lochplatten beträgt etwa 300 mm. Die Vertropferplatten sind mit einem Winkel von 3° leicht nach innen angestellt. Jede Vertröpferplatte ist mit einem zentrisch angeordnet Schwingungsgenerator ausgestattet, der eine einstellbare Anregungsfrequenz zwischen 1000 und 10000 Hz erzeugen kann. Die Vertropferplatten sind beheizt und in den Zuführungsleitungen zu den Vertropferplattem sind Filter mit einer Maschenweite von 50 $\mu$m eingebaut.

Betriebsversuche ergaben, dass eine Schmelzemenge von bis zu 1900 kg/h konfektioniert werden kann, ohne dass eine signifikante Belagsbildung an den Turmwänden zu erkennen ist. Dabei wurde eine Anregungsfrequenz von ca. 2700 Hz eingestellt. Der Luftmengenstrom wurde bei 14000 kg/h belassen. Ebenso wurde die Schmelzetemperatur beibehalten.

Das konfektionierte Produkt hat dabei eine sehr enge Partikelgrößenverteilung, die im Bereich von 300 bis 500 $\mu$m liegt. Das Schüttgewicht der Partikel ist niedriger als im Fall der Schmelzezerstäubung mittels Zweistoffdüse und beträgt ca. 650 kg/m$^3$.

Durch Umbau von Wärmetauscher und Gebläse konnte die Kühlluftmenge des Sprühturmes auf 19000 kg/h erhöht werden. Danach wurden mit den Vertropferplatten weitere Betriebsversuche durchgeführt, bei denen die Schmelzemenge weiter erhöht wurde. Es ergab sich, dass bis zu 2300 kg/h Schmelze konfektioniert werden konnte, ohne dass eine signifikante Belagsbildung an den Turmwänden zu beobachten war. Dabei wurde die Anregungsfrequenz auf ca. 3400 Hz erhöht. Durch Erhöhung der Schmelzemenge wurde die Partikelgrößenverteilung etwas breiter. Die Partikel lagen dabei in einem Durchmesserbereich von ca. 250 bis 600 $\mu$m. Das Schüttgewicht erhöhte sich auf etwa 680 kg/m$^3$.

Eine rechnerische Abschätzung ergab, dass eine Erhöhung der Kühlluftmenge auf 19000 kg/h im Falle der Zerstäubung mittels Zweistoffdüse nicht möglich gewesen wäre, weil infolge des Feinanteils in der Tropfengrößenverteilung ein zu großer Mitriss von Polymerpartikeln bzw. Tropfen im Abluftstrom zu erwarten gewesen wäre.

**Patentansprüche**

1. Vorrichtung zur Herstellung von Partikeln aus Schmelzen innerhalb eines Gasraumes, umfassend mindestens einen Schmelzeverteilerkörper, umfassend

   (a) mindestens eine Schmelzezuführung;
   (b) mindestens einem Schmelzekanal; und
   (c) mindestens eine Verteilerplatte mit einem oder mehreren Löchern.

2. Vorrichtung nach Anspruch 1, ferner umfassend eine Heizmediumverteilerplatte, umfassend

   (i) mindestens eine Heizmediumzuführung;
   (ii) mindestens eine Heizmediumabführung;
   (iii) mindestens einen Heizmediumkanal; und
   (iv) optional mindestens einen Schmelzekanal zur Verteilerplatte (c).

3. Vorrichtung nach Anspruch 1 oder 2 mit einer elektrischen Beheizung.

4. Vorrichtung nach einem der Ansprüche 1 bis 3, wobei die Verteilerplatte (c) mit einem Gerät (d) vebunden ist, das die Verteilerplatte (c) in Schwingung versetzt, deren Frequenz der Tropfenablösefrequenz dem aus der Verteilerplatte (c) austretenden Freistrahl entspricht.

5. Vorrichtung nach einem der Ansprüche 1 bis 4, wobei die Löcher der Verteilerplatte (c) unterschiedliche Durchmesser haben.

6. Vorrichtung nach einem der Ansprüche 1 bis 5, wobei die Bohrungslänge und Form für unterschiedliche Austrittslochdurchmesser so gewählt wird, dass sich immer dieselbe Tropfenablösefrequenz ergibt.

7. Vorrichtung nach einem der Ansprüche 1 bis 6, wobei der Schmelzeverteilerkörper mindestens zwei Verteilerplatten (c) umfasst, wobei die Verteilerplatten jeweils Löcher mit unterschiedlichen Durchmessern aufweisen.

8. Vorrichtung nach einem der Ansprüche 1 bis 7, wobei die Vorrichtung mindestens zwei Schmelzeverteilerkörper umfasst, welche jeweils mindestens eine Verteilerplatte (c) umfassen, und wobei die Verteilerplatten jeweils unterschiedliche Lochdurchmesser aufweisen.

9. Vorrichtung nach einem der Ansprüche 1 bis 8, ferner umfassend einen Filter, welcher vor oder unmittelbar nach der Schmelzezuführung (a) befestigt ist, wobei der Filter eine Maschenweite aufweist, welche 5% bis 75%, bevorzugt 10% bis 60%, besonders bevorzugt 15% bis 40% des Durchmessers des dem Filter kleinsten nachgeschalteten Loches entspricht.

10. Vorrichtung nach einem der Ansprüche 1 bis 9, wobei der Durchmesser der Löcher auf der Verteilerplatte (c) 50 bis 3000 $\mu$m, bevorzugt 75 bis 1500 $\mu$m, besonders bevorzugt 100 bis 750 $\mu$m ist.

11. Verfahren zur Herstellung von Partikeln aus Schmelzen innerhalb eines Gasraumes, umfassend folgende Schritte:

    ($\alpha$) Einführen einer Schmelze unter Druck in die Schmelzezuführung einer Vorrichtung nach einem der Ansprüche 1 bis 10, so dass durch die Löcher der Verteilerplatte (c) Tropfen in einem Freistrahl austreten;
    ($\beta$) Auffangen der nach ($\alpha$) ausgetretenen Tropfen in einer Kammer.

12. Verfahren nach Anspruch 11, wobei die Druckdifferenz relativ zum Gasraum, mit welchem die Schmelze in die Schmelzezuführung eintritt, 0,1 bis 100 bar, bevorzugt 0,5 bis 50 bar, besonders bevorzugt 1 bis 20 bar beträgt.

13. Verfahren nach Anspruch 11 oder 12, wobei die austretenden Tropfen nach ($\alpha$) beim zu Boden fallen durch einen Gasgegenstrom gekühlt werden.

**14.** Verfahren nach einem der Ansprüche 11 bis 13, wobei der Winkel der Verteilerplatten 0 bis 20°, bevorzugt 0 bis 15°, besonders bevorzugt 0 bis 10° relativ zu der Kammerwandung beträgt.

**15.** Vorrichtung nach einem der Ansprüche 1 bis 10 oder Verfahren nach einem der Ansprüche 11 bis 14, wobei die Schmelze aus Polyethern, aus Harnstoff, aus Gemischen von Polyethern mit weiteren Substanzen oder aus Gemischen von Harnstoff mit weiteren Substanzen besteht.

Figur 1

Figur 2

Figur 3

Figur 4

Figur 5

Figur 6

Figur 7

Figur 8

Figur 9

Figur 10

Figur 11

EP 2 735 364 A1

| Europäisches Patentamt / European Patent Office / Office européen des brevets | EUROPÄISCHER RECHERCHENBERICHT | Nummer der Anmeldung EP 12 19 4383 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 992 995 A2 (RICOH KK [JP]) 19. November 2008 (2008-11-19) * Absätze [0073], [0087]; Anspruch 1; Abbildung 1 * ----- | 1-15 | INV. B01J2/04 B01J2/18 |
| X | WO 03/054063 A1 (BUEHLER AG [CH]; CULBERT BRENT-ALLEN [CH]; CHRISTEL ANDREAS [CH]; KRUM) 3. Juli 2003 (2003-07-03) * Seite 19, letzter Absatz; Ansprüche 1-4,42; Abbildung 1 * ----- | 1-15 | |
| X | FR 2 827 793 A1 (IND DES POUDRES SPHERIQUES [FR]) 31. Januar 2003 (2003-01-31) * Seite 6, Absatz 1; Anspruch 1; Abbildung 1 * ----- | 1-15 | |

**RECHERCHIERTE SACHGEBIETE (IPC)**

B01J

Der vorliegende Recherchenbericht wurde für alle Patentansprüche erstellt

| Recherchenort | Abschlußdatum der Recherche | Prüfer |
|---|---|---|
| Den Haag | 10. April 2013 | Gilliquet, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

22

**ANHANG ZUM EUROPÄISCHEN RECHERCHENBERICHT**
**ÜBER DIE EUROPÄISCHE PATENTANMELDUNG NR.**

EP 12 19 4383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2013

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1992995 | A2 | 19-11-2008 | CN | 101308340 | A | 19-11-2008 |
| | | | EP | 1992995 | A2 | 19-11-2008 |
| | | | JP | 5047688 | B2 | 10-10-2012 |
| | | | JP | 2008286947 | A | 27-11-2008 |
| | | | US | 2008286680 | A1 | 20-11-2008 |
| WO 03054063 | A1 | 03-07-2003 | AT | 502976 | T | 15-04-2011 |
| | | | AU | 2002349246 | A1 | 09-07-2003 |
| | | | BR | 0214871 | A | 28-12-2004 |
| | | | CN | 1602328 | A | 30-03-2005 |
| | | | CN | 1919898 | A | 28-02-2007 |
| | | | DE | 10204954 | A1 | 18-06-2003 |
| | | | EP | 1453890 | A1 | 08-09-2004 |
| | | | JP | 2005537339 | A | 08-12-2005 |
| | | | MX | PA04005746 | A | 10-09-2004 |
| | | | US | 2008272508 | A1 | 06-11-2008 |
| | | | WO | 03054063 | A1 | 03-07-2003 |
| | | | ZA | 200403219 | A | 06-05-2005 |
| FR 2827793 | A1 | 31-01-2003 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015109 A1
- DE 2601145 A1
- DE 1803724 A1

**In der Beschreibung aufgeführte Nicht-Patentliteratur**

- **ARTHUR H.** Lefebvre: Atomization and Sprays, Combustion: An International Series. Hemisphere Publishing Corporation, 1989, 27-72